# EUROPÄISCHE PATENTSCHRIFT

(11) **EP 0 736 410 B1**
(45) Veröffentlichungstag und Bekanntmachung des Hinweises auf die Patenterteilung: **16.08.2000**
(21) Anmeldenummer: 96102901.4
(22) Anmeldetag: 27.02.1996
(51) Int. Cl.: B60K 35/00, B60K 37/00, B60R 21/32

(54) **Anordnung eines Airbag-Steuergerätes eines Kraftfahrzeuges**
Device for controlling a vehicle airbag
Dispositif de commande d'un coussin de sécurité gonflable de véhicule

(30) Priorität: 07.04.1995 DE 19513082
(43) Veröffentlichungstag der Anmeldung: 09.10.1996
(73) Patentinhaber: ROBERT BOSCH GMBH, 70442 Stuttgart (DE)
(72) Erfinder: Peter, Cornelius, Dipl.-Ing., D-77815 Beuhl (DE); Friedl, Bernhard, Dipl.Phys., D-71272 Renningen (DE)

(56) Entgegenhaltungen:
- EP-A- 0 334 234
- WO-A-87/04673
- DE-A- 4 319 079
- US-A- 4 929 182
- ATZ AUTOMOBILTECHNISCHE ZEITSCHRIFT, Bd. 94, Nr. 3, 1.März 1992, Seiten 110-113, 115, 116, 118, 120 , XP000257674 SCHUSTER H ET AL: "DER NEUE AIRBAG VON VOLKSWAGEN"

## Beschreibung

### Stand der Technik

Die Erfindung geht aus von einer Anordnung eines Steuergerätes für mindestens einen Airbag eines Kraftfahrzeuges nach dem Oberbegriff des Anspruchs 1. Steuergeräte für Airbagsysteme müssen zuverlässig arbeiten. Aus diesem Grunde werden die Steuergeräte an einer vor äußeren Einflüssen geschützten Stelle im Kraftfahrzeug eingebaut. Bekannt ist beispielsweise, das Steuergerät auf dem Tunnel im vorderen Fußbereich des Cockpits anzuordnen. Dieser Einbauort wurde gewählt, um einerseits einen zentralen Punkt für die sichere und rechtzeitige Detektierung eines Crashs zu gewinnen und andererseits die erforderliche Leitungsverlegung einfach zu gestalten. (ATZ, Automobiltechnische Zeitschrift 94 (1992) 3, S. 110 bis 113).

Anzeigevorrichtungen für Kraftfahrzeuge, die auch als Kombiinstrumente bezeichnet werden, besitzten eine Leiterplatte, die sich im wesentlichen über die gesamte Breite des Kombiinstruments erstreckt. Diese Ausdehnung ist erforderlich, um die Stromversorgung der jeweils außen gelegenen Anzeigeinstrumente zu gewährleisten. Insofern bietet die Leiterplatte genügend Platz für elektrische und elektronische Bauelemente. Andererseits ist, insbesondere bei kompakten Kraftfahrzeugen, der vorhandene Platz für einzubauende Bauteile beziehungsweise Baugruppen optimal auszunutzen.

### Vorteile der Erfindung

Die erfindungsgemäße Anordnung mit den Merkmalen des Hauptanspruchs hat den Vorteil, daß der auf der Leiterplatte der Anzeigevorrichtungen vorhandene Platz besser ausgenutzt wird und somit im Cockpit kein zusätzlicher Platz für die Unterbringung des Steuergerätes nötig ist. Die für die Anzeigeinstrumente der Anzeigevorrichtung notwendige Spannungsversorgung kann gleichzeitig für das Steuergerät benutzt werden.

Durch die in den abhängigen Ansprüchen aufgeführten Maßnahmen sind vorteilhafte Weiterbildungen der im Hauptanspruch angegebenen Anordnung möglich. Bei der Montage des Beschleunigungssensors auf der Leiterplatte ist besonders darauf zu achten, daß ein definiertes Übertragungsverhalten der Leiterplatte hinsichtlich der auf das Gerät einwirkenden Beschleunigungen gegeben ist. Besonders viel Platz bietet die Leiterplatte auf der Rückseite. Zweckmäßig ist ferner, das Steuergerät zusätzlich mit einem elektronischen Unfalldatenschreiber auszurüsten beziehungsweise den Unfalldatenschreiber ebenfalls auf der Leiterplatte unterzubringen.

### Zeichnung

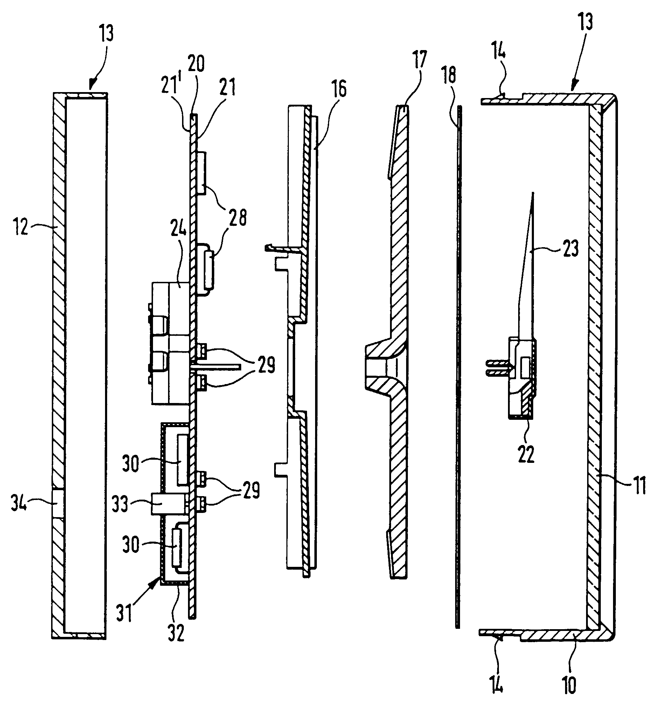

Ein Ausführungsbeispiel der Erfindung ist in der Zeichnung dargestellt und in der nachfolgenden Beschreibung näher erläutert. Die einzige Figur zeigt eine auseinandergezogene, schematische Längsschnittdarstellung einer Anzeigevorrichtung einer Instrumententafel eines Kraftfahrzeuges.

### Ausführungsbeispiel

Die dargestellte Anzeigevorrichtung hat ein aus einem Frontrahmen 10 mit einer Deckscheibe 11 und einem rückseitigen Deckel 12 bestehendes Gehäuse 13. Der Frontrahmen 10 und der Deckel 12 werden beispielsweise mit einer Klipsverbindung 14 verbunden.

Im Gehäuse 13 ist ein Instrumententräger 16 mit beispielsweise einer Leuchtscheibe 17 und einem Zifferblatt 18 und eine Leiterplatte 20 mit einer Frontseite 21 und einer Rückseite 21' untergebracht. Im Gehäuse 13 sind ferner Anzeigeinstrumente angeordnet, wobei im vorliegenden Ausführungsbeispiel als Anzeigeinstrument ein Tachometer 22 mit einem Zeiger 23 gezeigt wird. Der Tachometer 22 wird hierbei mit einem Schrittmotor 24 angetrieben.

Auf der Leiterplatte 20 sind elektrische und elektronische Bauelemente 28 zur Ansteuerung der Anzeigeinstrumente aufgelötet. Zu den Bauelementen 28 gehört auch mindestens eine Beleuchtungseinrichtung 29 für die Anzeigeinstrumente, wie beispielsweise eine LED oder SMD-Lampe. Die Bauelemente 28 und die Beleuchtungseinrichtung 29 sind beispielsweise auf der Frontseite 21 der Leiterplatte 20 angeordnet. Der Schrittmotor 24 ist im vorliegenden Ausführungsbeispiel an der Rückseite 21' der Leiterplatte 20 befestigt. Es ist aber genauso möglich, den Schrittmotor 24 an der Frontseite 21 der Leiterplatte 20 anzubringen.

Auf der Rückseite 21' der Leiterplatte 20 befinden sich weitere elektronische Bauelemente 30 eines Steuergerätes 31 für einen Airbag. Die Bauelemente 30 sind beispielsweise von einem hochfrequenzdichten Gehäuse 32 umgeben. Die Anordnung der Bauelemente 30 auf der Rückseite 21' der Leiterplatte 20 wurde gewählt, weil dort ausreichend Platz zur Verfügung steht. Es ist aber genauso denkbar die Bauelemente 30 des Steuergerätes 31 an der Frontseite 21 der Leiterplatte 20 anzubringen. Das Steuergerät 31 verfügt über eine Steckverbindung 33 zum Anschluß der Leitungsverbindung, die zum Airbag-Zündgerät führt. Die Steckverbindung 33 ist, beispielsweise wie die nicht dargestelle Stromversorgung für die elektrischen und elekronischen Bauelemente 28, durch eine in der Rückwand des Deckels 11 vorgesehene Öffnung 34 geführt. Das Steuergerät 31 kann aber auch als eine mit einem Gehäuse versehene separate Einheit mit an sich bekannten Mitteln auf der Leiterplatte 20 befestigt sein.

Eine Ausführungsform des Steuergerätes 31 besteht darin, daß das Steuergerät lediglich die signalverarbeitenden elektronischen Bauelemente enthält. In diesem Fall sind die die Crashsituation detektierenden Beschleunigungssensoren außerhalb des Steuergerätes 31 angeordnet. Die Anordnung der Beschleunigungssensoren ist dabei so gewählt, daß eine sichere und rechtzeitige Detektierung eines Crashs möglich ist. Es ist aber auch denkbar, einen elektronischen Beschleunigungssensor in das Steuergerät 31 zu integrieren. In diesem Fall ist eine kraftaufnehmende Kopplung der Leiterplatte 20 mit dem Gehäuse 13 der Anzeigevorrichtung notwendig. Darüberhinaus erfordert diese Ausführung des Steuergerätes 31, daß das Gehäuse 13 der Anzeigevorrichtung mit der Karroserie eine direkte Verbindung aufweist. Eine derartige Verbindung kann beispielsweise dadurch realisiert werden, daß die Anzeigevorrichtung selbst mit einem Querträger der Karrosserie verbunden ist oder daß die Anzeigevorrichtung in einer mit dem Querträger verbundenen Instrumententafel kraftübertragend verankert ist.

Es ist ebenfalls denkbar, eine auf der Leiterplatte 20 vorgesehene Speichereinheit für beispielsweise die Anzeigeinstrumente, wie beispielsweise einen EEPROM oder eine elektronische Rechnereinheit, gleichzeitig für das Steuergerät 31 zu nutzen. Gleichfalls denkbar ist, das Steuergerät 31 mit einem elektronischen Unfalldatenschreiber auszurüsten beziehungsweise den Unfalldatenschreiber auf der Leiterplatte 20 unterzubringen.

## Patentansprüche

1. Anordnung eines Steuergerätes für mindestens einen Airbag eines Kraftfahrzeuges, dadurch gekennzeichnet, daß das Steuergerät (31) auf einer Leiterplatte (20) einer Anzeigevorrichtung einer Instrumententafel untergebracht ist.

2. Anordnung nach Anspruch 1, dadurch gekennzeichnet, daß das Steuergerät (31) auf der Rückseite der Leiterplatte (20) angeordnet ist.

3. Anordnung nach Anspruch 1 oder 2, dadurch gekennzeichnet, daß das Steuergerät (31) Bauelemente (30) aufweist, welche auf der Leiterplatte (20) angeordnet sind.

4. Anordnung nach Anspruch 3, dadurch gekennzeichnet, daß die Bauelemente (30) des Steuergerätes (31) mit einem hochfrequenzdichten Gehäuse (32) umkapselt sind.

5. Anordnung nach Anspruch 1 oder 2, dadurch gekennzeichnet, daß das Steuergerät (31) eine mit einem Gehäuse versehene separate Baueinheit ist, welche auf der Leiterplatte (20) angeordnet ist.

6. Anordnung nach Anspruch 1, dadurch gekennzeichnet, daß das Steuergerät (31) mindestens einen Beschleunigungssensor zur Erfassung einer Crashsituation enthält.

## Claims

1. Arrangement of a control unit for at least one airbag of a motor vehicle, characterized in that the control unit (31) is accommodated on a printed circuit board (20) of a display device of an instrument panel.

2. Arrangement according to Claim 1, characterized in that the control unit (31) is arranged on the rear side of the printed circuit board (20).

3. Arrangement according to Claim 1 or 2, characterized in that the control unit (31) has components (30) which are arranged on the printed circuit board (20).

4. Arrangement according to Claim 3, characterized in that the components (30) of the control unit (31) are encapsulated by an RF-proof housing (32).

5. Arrangement according to Claim 1 or 2, characterized in that the control unit (31) is a separate subassembly, which is provided with a housing and arranged on the printed circuit board (20).

6. Arrangement according to Claim 1, characterized in that the control unit (31) contains at least one acceleration sensor for detecting a crash situation.

## Revendications

1. Dispositif d'un appareil de commande pour au moins un coussin d'air d'un véhicule automobile,
caractérisé en ce que
l'appareil de commande (31) est logé sur une carte à circuits imprimés (20) d'un dispositif indicateur d'un tableau d'instruments.

2. Dispositif selon la revendication 1,
caractérisé en ce que
l'appareil de commande (31) est disposé sur la face arrière de la carte à circuits imprimés (20).

3. Dispositif selon la revendication 1 ou 2,
caractérisé en ce que
l'appareil de commande (31) présente des composants (30) qui sont disposés sur la carte à circuits imprimés (20).

4. Dispositif selon la revendication 3,
caractérisé en ce que
les composants (30) de l'appareil de commande (31) sont encapsulés dans un boîtier (32), étanche aux hautes fréquences.

5. Dispositif selon la revendication 1 ou 2,
caractérisé en ce que
l'appareil de commande (31) constitue une unité séparée, pourvue d'un boîtier qui est disposée sur la carte à circuits imprimés (20).

6. Dispositif selon la revendication 1,
caractérisé en ce que
l'appareil de commande (31) contient au moins un capteur d'accélération servant à détecter une situation de collision.
